# EUROPEAN PATENT APPLICATION

(11) **EP 1 729 450 A1**
(43) Date of publication of application: **06.12.2006**
(21) Application number: 05758319.7
(22) Date of filing: 08.07.2005
(51) Int. Cl.: H04L 12/28, H04B 7/26, H04L 12/46, H04Q 7/36

(54) **ACCESS POINT CONTROL SYSTEM, AND ACCESS POINT CONTROL METHOD**

(30) Priority: 16.07.2004 JP 2004209568
(71) Applicant: MATSUSHITA ELECTRIC INDUSTRIAL CO., LTD., Osaka 571-8501 (JP)
(72) Inventor: IINO, Satoshi c/o Matsushita Electric Industrial, Chuo-ku, Osaka-shi, Osaka 540-6319 (JP); ISHIHARA, Tomohiro c/o Matsushita Electric Indust, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/012678
(87) International publication number: WO 2006/008989

(57) **Abstract**

An access point control system capable of easily executing the correspondence between the BSSID and the VLAN of an access point device. This access point control system (100) comprises a plurality of access point devices (110-1, 110-2), and an access point control device (120) for controlling the access point devices (110-1, 110-2) by sending a message to the access point devices (110-1, 110-2). The access point control device (120) is provided with a frame division unit (123) for dividing the frames from the access point devices (110-1, 110-2) into a plurality of VLAN networks (130-1, 130-2) on the basis of the BSSID, and division target changing means for changing the VLAN networks (130-1, 130-2) of the division targets divided by the division unit (123).

## Description

### Technical Field

The present invention relates to an access point control system and access point control method comprising a plurality of access point apparatuses and an access point control apparatus that transmits messages to the plurality of access point apparatuses and controls the plurality of access point apparatuses.

### Background Art

In recent years, the diffusion of wireless LANs (IEEE802.11 standard) has progressed, and large-scale wireless LAN network systems have been constructed in public networks and corporate networks. Along with this, a method has been proposed in Non-patent Document 1 whereby virtual access point apparatus (AP) multiplexing is performed, making good use of few radio frequencies.

Here, a plurality of BSSIDs (Basic Service Set Identifiers) are assigned in a single access point apparatus, and it appears to communication terminal apparatuses as if there are a plurality of virtual access pointapparatuses. By this means, a plurality of networks can be used in a multiplexed fashion while using the same radio channel. A VLAN (Virtual Local Area Network) can be used for host-side identification.

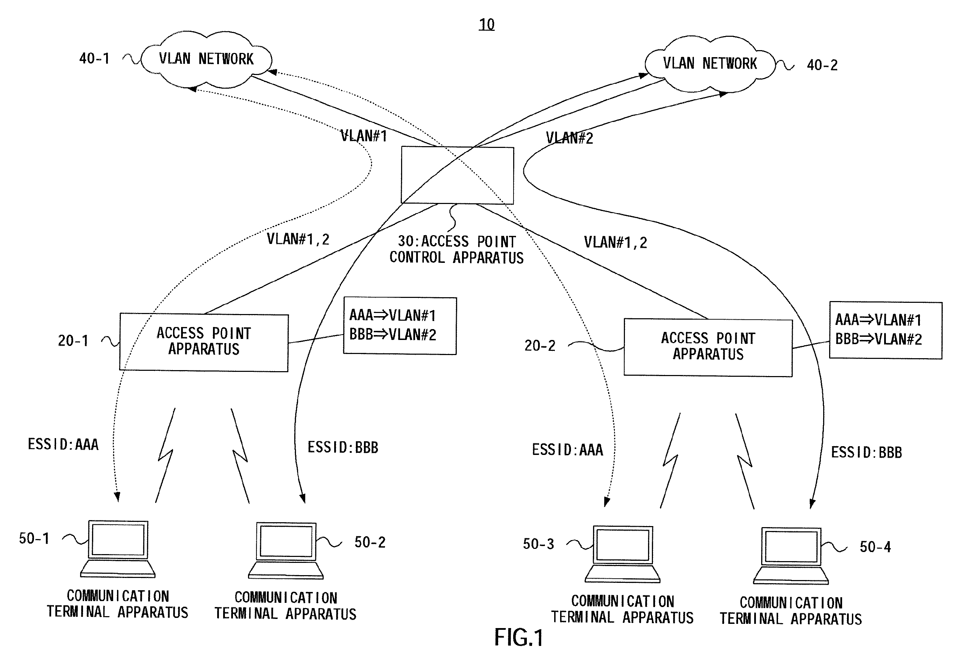

In the technology described in Non-patent Document 1, since a plurality of BSSIDs can be set for one access point apparatus, dynamic VLAN extension is performed for each BSSID. A conventional access point control system in which a plurality of access point apparatuses are combined is shown in FIG.1.

As shown in FIG.1, a conventional access point control system 10 includes a plurality of access point apparatuses 20-1 and 20-2, an access point control apparatus 30, and VLAN networks 40-1 and 40-2. Access point apparatus 20-1 can communicate with communication terminal apparatuses 50-1 and 50-2, and access point apparatus 20-2 can communicate with communication terminal apparatuses 50-3 and 50-4.

Access point apparatus 20-1 holds two ESSIDs (Extended Service Set Identifiers), AAA and BBB, and holds BSSIDs corresponding to these. Here, the BSSID corresponding to ESSID AAA is assumed to be AP1-1, and the BSSID corresponding to ESSID BBB is assumed to be AP2-2. In fact, a 6-byte identifier is held for a BSSID, as for a MAC address.

Similarly, access point apparatus 20-2 holds two ESSIDs, AAA and BBB, and holds BSSIDs corresponding to these. Here, the BSSID corresponding to ESSID AAA is assumed to be AP1-1, and the BSSID corresponding to ESSID BBB is assumed to be AP2-2. In fact, a 6-byte identifier is held for a BSSID, as for a MAC address.

ESSID AAA is connected to VLAN network 40-1, and ESSID BBB is connected to VLAN network 40-2. VLAN #1 (VLAN tag #1) is assigned to VLAN network 40-1, and VLAN #2 (VLAN tag #2) is assigned to VLAN network 40-2.

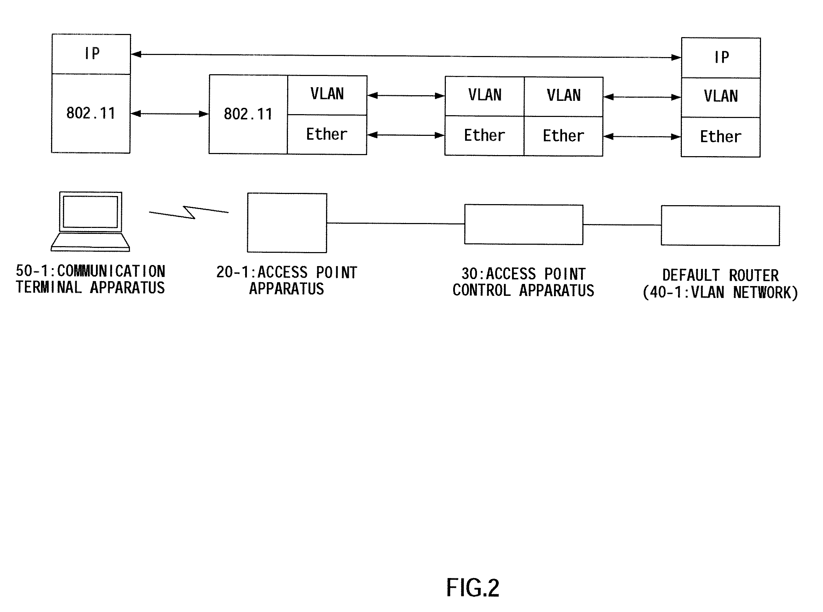

Thus, in the case of access point apparatus 20-1, when the BSSID is AP1-1, when a frame is sent to the host side it is sent to VLAN #1 VLAN network 40-1. Frames with a VLAN tag are constantly transmitted between the VLAN switch and access point apparatuses (see the protocol stack in FIG.2). In this way, access point control system 10 controls connections to VLAN networks 40-1 and 40-2, the connection destinations of communication terminal apparatuses 50-1 through 50-4.
Non-patent Document 1: IEEE Document IEEE802.11-03/154r1 "Virtual Access Points"

### Disclosure of Invention

### Problems to be Solved by the Invention

However, a problem with a conventional access point control system is that, since it is necessary to set the correspondence between BSSIDs and VLANs in all access points, when VLANs belonging to a network change, it is necessary to change all the correspondences between BSSIDs and VLANs of access point apparatuses connected to that network.

Another problem with a conventional access point control system is that, when connection destinations are changed, it is difficult to carry out setting changes simultaneously if the number of connection destination changes is large, since setting changes must be made for each VAN switching apparatus and access point apparatus.

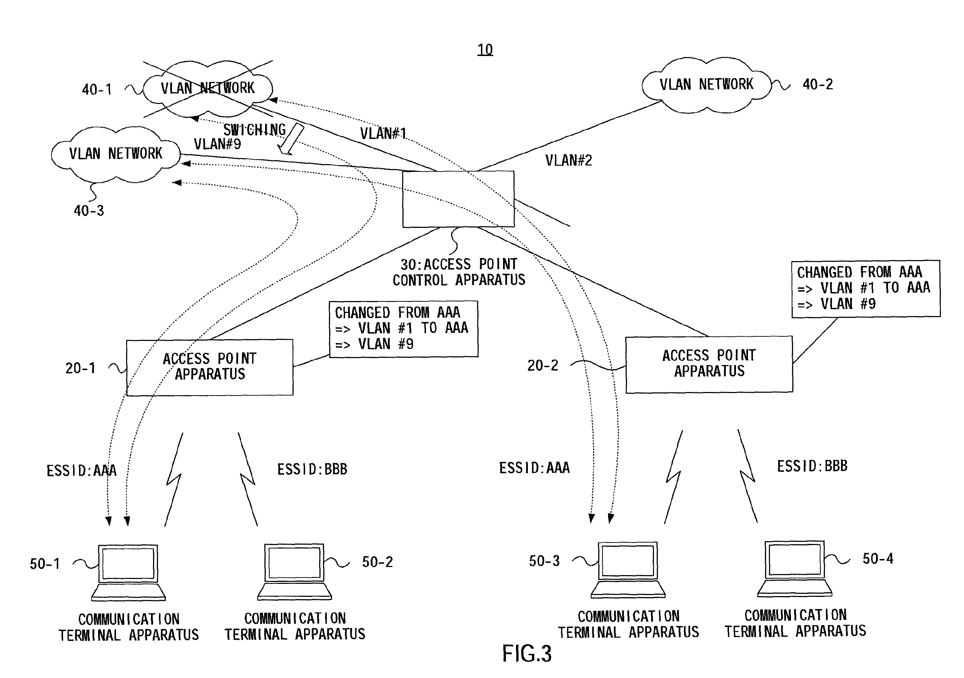

For example, in conventional access point control system 10 shown in FIG.1, when the ESSID AAA connection destination is changed from VLAN network 40-1 (VLAN #1) to VLAN network 40-3 (VLAN #9) as shown in FIG.3, it is necessary to carry out setting changes in the VLAN switching apparatus and access point apparatuses. Thus, a problem with a conventional access point control system is that it is difficult to perform setting changes synchronously when changing connection destinations if there are a large number of connection destination changes.

It is an object of the present invention to provide an access point control system and access point control method that enable a change of correspondence between an access point apparatus' s BSSID and a VLAN to be executed easily, and enable setting changes to be carried out synchronously when changing connection destinations even if there are a large number of connection destination changes.

### Means for Solving the Problems

An access point control system of the present invention includes a plurality of access point apparatuses, and an access point control apparatus that transmits messages to the plurality of access point apparatuses and controls the plurality of access point apparatuses; wherein the access point control apparatus has a configuration that comprises a distribution section that distributes frames from the access point apparatuses to a plurality of VLAN networks based on BSSIDs, and a distribution destination change section that changes the distribution destination VLAN network according to the distribution section.

An access point control method of the present invention is an access point control method in an access point control system that includes a plurality of access point apparatuses, and an access point control apparatus that transmits messages to the plurality of access point apparatuses and controls the plurality of access point apparatuses; and this access point control method comprises a distribution step of having the access point control apparatus distribute frames from the access point apparatuses to a plurality of VLAN networks based on BSSIDs, and a distribution destination changing step of changing the distribution destination VLAN network in the distribution step.

### Advantageous Effect of the Invention

According to the present invention, an access point control apparatus distributes frames from access point apparatuses to a plurality of VLAN networks based on BSSIDs, and changes the distribution destination VLAN network, enabling a change of correspondence between an access point apparatus's BSSID and a VLAN to be executed easily, and enabling setting changes to be carried out synchronously when changing connection destinations even if there are a large number of connection destination changes.

### Brief Description of Drawings

FIG.1 is a drawing showing the configuration of a conventional access point control system;
FIG.2 is a drawing showing an example of a protocol stack used in a conventional access point control system;
FIG.3 is a drawing for explaining the operation in the event of network switching in a conventional access point control system;
FIG.4 is a drawing showing the configuration of an access point control system according to one embodiment of the present invention;
FIG.5 is a drawing showing an example of a protocol stack used in an access point control system according to one embodiment of the present invention;
FIG.6 is a block diagram showing the detailed configuration of an access point control apparatus of an access point control system according to one embodiment of the present invention;
FIG.7 is a drawing showing an ESSID-VLAN correspondence table of a frame distribution database in an access point control apparatus of an access point control system according to one embodiment of the present invention;
FIG.8 is a drawing showing an ESSID-AP correspondence table of a frame distribution database in an access point control apparatus of an access point control system according to one embodiment of the present invention;
FIG.9 is a drawing showing a BSSID-VLAN correspondence table of a frame distribution database in an access point control apparatus of an access point control system according to one embodiment of the present invention;
FIG.10 is a drawing showing a terminal-BSSID correspondence table of a frame distribution database in an access point control apparatus of an access point control system according to one embodiment of the present invention;
FIG.11 is a flowchart for explaining the operation of a BSSID-VLAN correspondence table in an access point control system according to one embodiment of the present invention;
FIG.12 is a flowchart for explaining the operation of a frame distribution section in an access point control system according to one embodiment of the present invention;
FIG.13 is a flowchart for explaining the operation of a network-side transmitting/receiving section in an access point control system according to one embodiment of the present invention;
FIG.14 is a flowchart for explaining the operation of anAP-side transmitting/receiving section in an access point control system according to one embodiment of the present invention;
FIG.15 is a drawing for explaining the operation in the event of network switching in an access point control system according to one embodiment of the present invention;
FIG.16 is a drawing showing an example of an ESSID-VLAN correspondence table after being changed in an access point control system according to one embodiment of the present invention;
FIG.17 is a flowchart for explaining a BSSID-VLAN correspondence table change in the event of network switching in an access point control system according to one embodiment of the present invention; and
FIG. 18 is a drawing showing an example of a BSSID-VLAN correspondence table after being changed in an access point control system according to one embodiment of the present invention.

### Best Mode for Carrying Out the Invention

An embodiment of the present invention will now be described in detail with reference to the accompanying drawings.

### (One Embodiment)

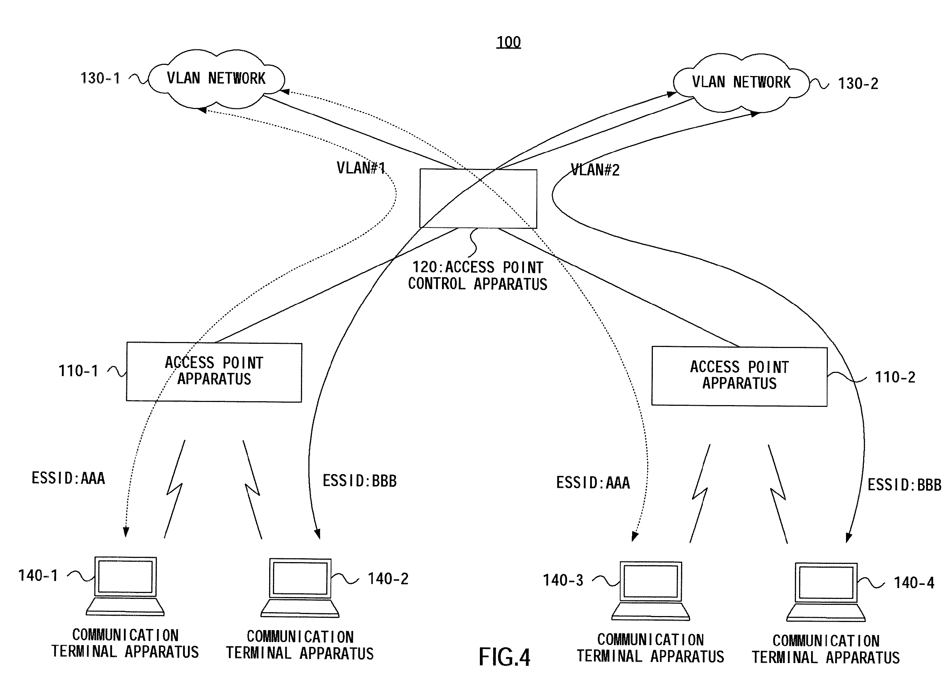

FIG.4 is a drawing showing the configuration of an access point control system according to one embodiment of the present invention.

As shown in FIG.4, an access point control system 100 according to one embodiment of the present invention includes a plurality of access point apparatuses 110-1 and 110-2, an access point control apparatus 120, and VLAN networks 130-1 and 130-2.

Access point control apparatus 120 transmits messages to plurality of access point apparatuses 110-1 and 110-2 and controls this plurality of access point apparatuses. Access point apparatus 110-1 can communicate with communication terminal apparatuses 140-1 and 140-2, and access point apparatus 110-2 can communicate with communication terminal apparatuses 140-3 and 140-4. VLAN networks 130-1 and 130-2 are configured as ISP networks, for example.

Access point apparatus 110-1 holds two ESSIDs, AAA and BBB, and holds BSSIDs corresponding to these. Here, the BSSID corresponding to ESSID AAA is assumed to be AP1-1, and the BSSID corresponding to ESSID BBB is assumed to be AP2-2. In fact, a 6-byte identifier is held for a BSSID, as for a MAC address.

Similarly, access point apparatus 110-2 holds two ESSIDs, AAA and BBB, and holds BSSIDs corresponding to these. Here, the BSSID corresponding to ESSID AAA is assumed to be AP1-1, and the BSSID corresponding to ESSID BBB is assumed to be AP2-2. In fact, a 6-byte identifier is held for a BSSID, as for a MAC address.

ESSID AAA is connected to VLAN network 130-1, and ESSID BBB is connected to VLAN network 130-2. VLAN #1 (VLAN tag #1) is assigned to VLAN network 130-1, and VLAN #2 (VLAN tag #2) is assigned to VLAN network 130-2.

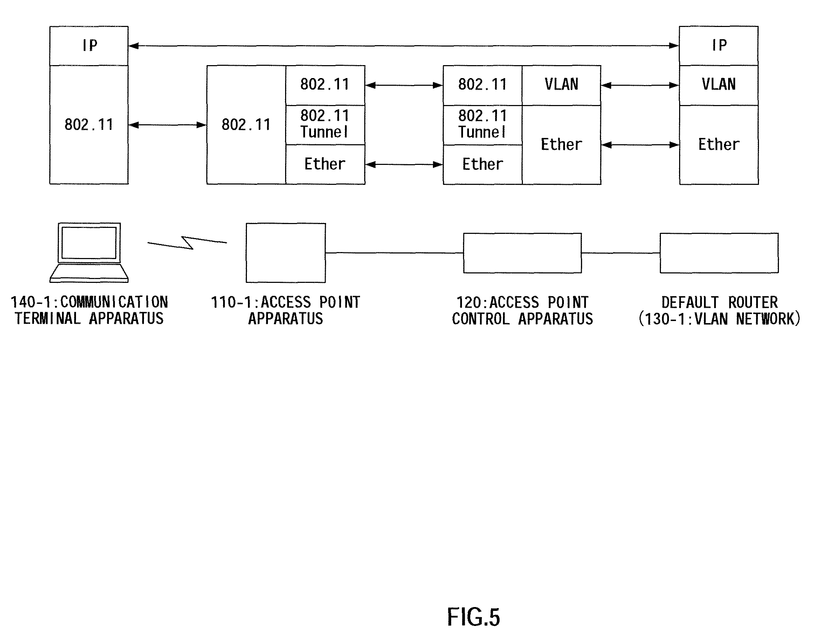

Thus, in the case of access point apparatus 110-1, when the BSSID is AP1-1, when a frame is sent to the host side it is sent to VLAN #1 VLAN network 130-1. Frames with a VLAN tag are constantly transmitted between the VLAN switch and access point apparatuses (see the protocol stack in FIG.5). In this way, access point control system 100 controls connections to VLAN networks 130-1 and 130-2, the connection destinations of communication terminal apparatuses 140-1 through 140-4.

FIG. 5 is a drawing showing an example of a protocol stack used in access point control system 100 according to one embodiment of the present invention. In the protocol used in an access point control system according to one embodiment of the present invention, an 802.11 frame is encapsulated in an Ether header between access point apparatus 110-1 and access point control apparatus 120, and access point control apparatus 120 performs 802.11 frame/Ether frame bridge processing.

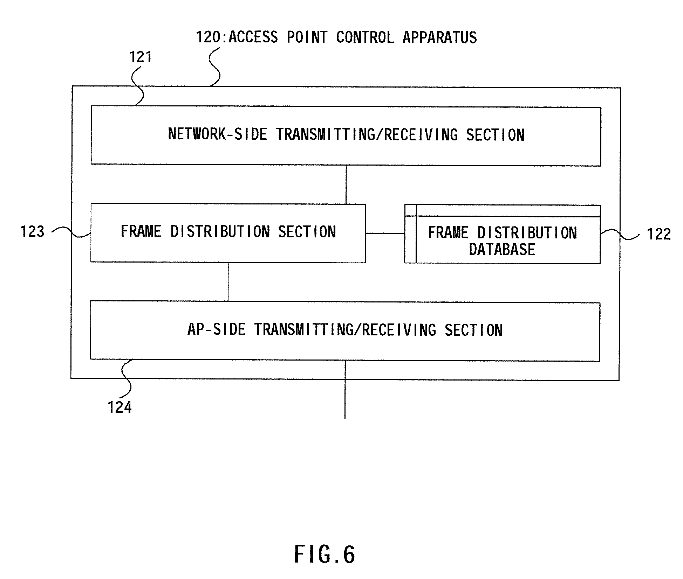

FIG.6 is a block diagram showing the detailed configuration of access point control apparatus 120 of access point control system 100 according to one embodiment of the present invention.

As shown in FIG.6, access point control apparatus 120 is equipped with a network-side transmitting/receiving section 121, a frame distribution database 122, a frame distribution section 123, and an AP-side transmitting/receiving section 124.

Network-side transmitting/receiving section 121 performs frame transmission/reception to/from VLAN networks 130-1 and 130-2, and performs frame transmission/reception to/from frame distribution section 123. Frame distribution database 122 is a database for performing frame distribution. Frame distribution database 122 includes correspondence tables such as an ESSID-VLAN correspondence table, an ESSID-AP correspondence table, a BSSID-VLAN correspondence table, and a terminal-BSSID correspondence table.

Frame distribution section 123 distributes frames from network-side transmitting/receiving section 121 and AP-side transmitting/receiving section 124, referring to frame distribution database 122, and performs frame transfer. AP-side transmitting/receiving section 124 performs frame transmission/reception to/from frame distribution section 123, and performs frame transmission/reception to/from access point apparatuses 110-1 and 110-2.

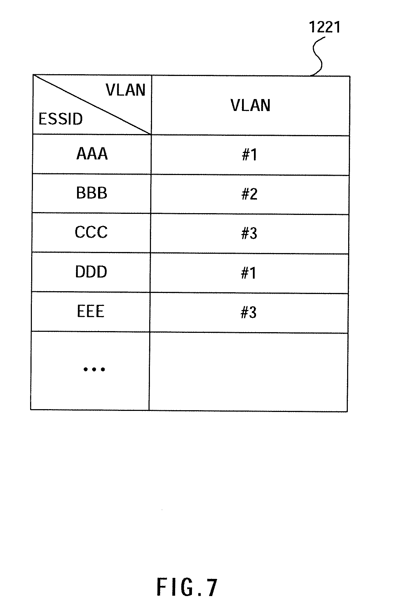

FIG.7 is a drawing showing an ESSID-VLAN correspondence table of frame distribution database 122 in access point control apparatus 120 of access point control system 100 according to one embodiment of the present invention.

This ESSID-VLAN correspondence table 1221 holds correspondence information for ESSIDs and VLANs (VLAN tags). In this information, an ESSID is mapped to one VLAN. This information is set by the administrator.

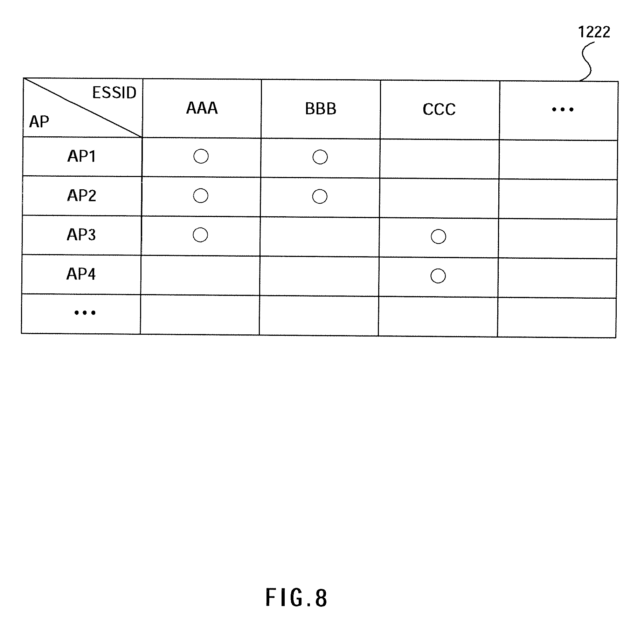

FIG.8 is a drawing showing an ESSID-AP correspondence table of frame distribution database 122 in access point control apparatus 120 of access point control system 100 according to one embodiment of the present invention.

This ESSID-AP correspondence table 1222 holds correspondence information for ESSIDs and access point apparatuses (APs) by which those ESSIDs are covered. In this information, an ESSID is mapped to a plurality of access point apparatuses (APs). This information is set by the administrator.

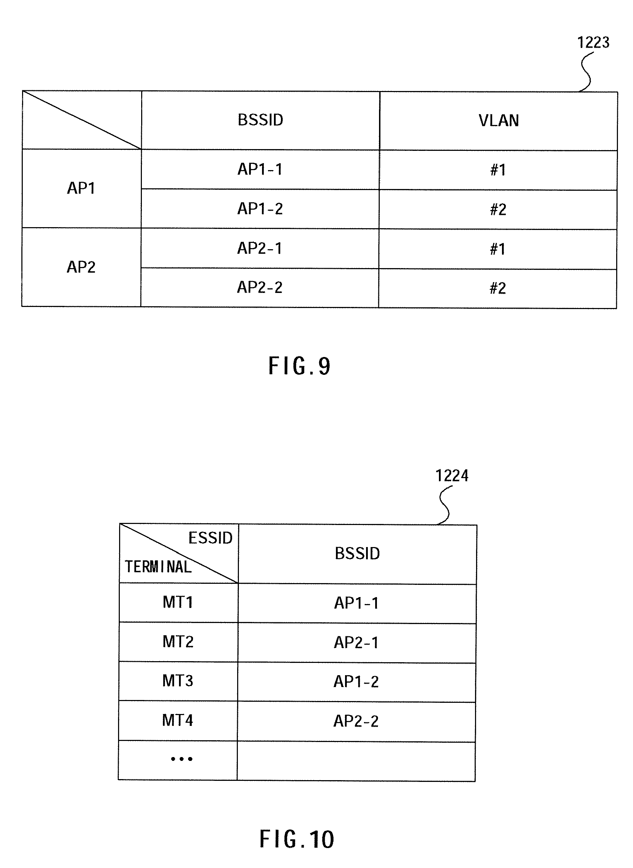

FIG.9 is a drawing showing a BSSID-VLAN correspondence table of frame distribution database 122 in access point control apparatus 120 of access point control system 100 according to one embodiment of the present invention.

This BSSID-VLAN correspondence table 1223 holds correspondence information for BSSIDs assigned to access point apparatuses (APs) and network-side VLAN IDs. This information is created based on the information in ESSID-VLAN correspondence table 1221 and ESSID-AP correspondence table 1222.

FIG.10 is a drawing showing a terminal-BSSID correspondence table of frame distribution database 122 in access point control apparatus 120 of access point control system 100 according to one embodiment of the present invention.

This terminal-BSSID correspondence table 1224 holds correspondence information for communication terminal apparatuses and BSSIDs to which these communication terminal apparatuses are connected. In this information, a communication terminal apparatus is mapped to one BSSID. This information is acquired (learned) at the time of communication terminal apparatus connection.

Next, the operation of access point control system 100 according to one embodiment of the present invention will be described in greater detail.

### (1) Preparations before frame distribution operation

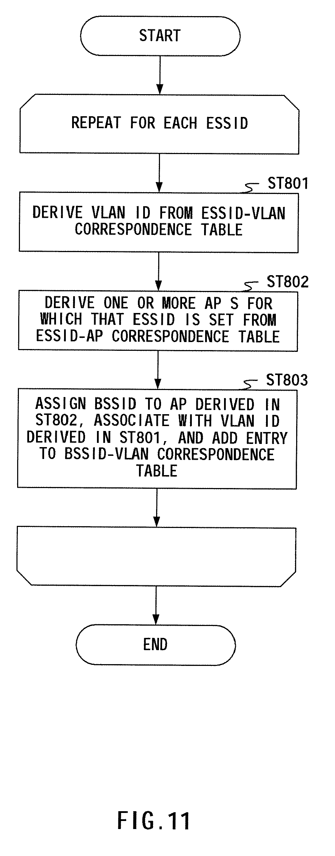

FIG.11 is a flowchart for explaining the operation of a BSSID-VLAN correspondence table in access point control system 100 according to one embodiment of the present invention.

As shown in FIG.11, in step ST801 frame distribution section 123 derives a VLAN ID based on ESSID-VLAN correspondence table 1221 information with the frame ESSID as the key.

Then frame distribution section 123 derives information of one or more access point apparatuses (APs) based on information in ESSID-AP correspondence table 1222 (step ST802).

Next, frame distribution section 123 assigns one BSSID to the access point apparatus (AP) derived in step ST802, associates the VLAN ID derived in step ST801 with this to make one entry, and adds this entry to BSSID-VLAN correspondence table 1223. Frame distribution section 123 repeats the operations from step ST801 through step ST803 for the number of set ESSIDs.

### (2) Operation in case of normal functioning

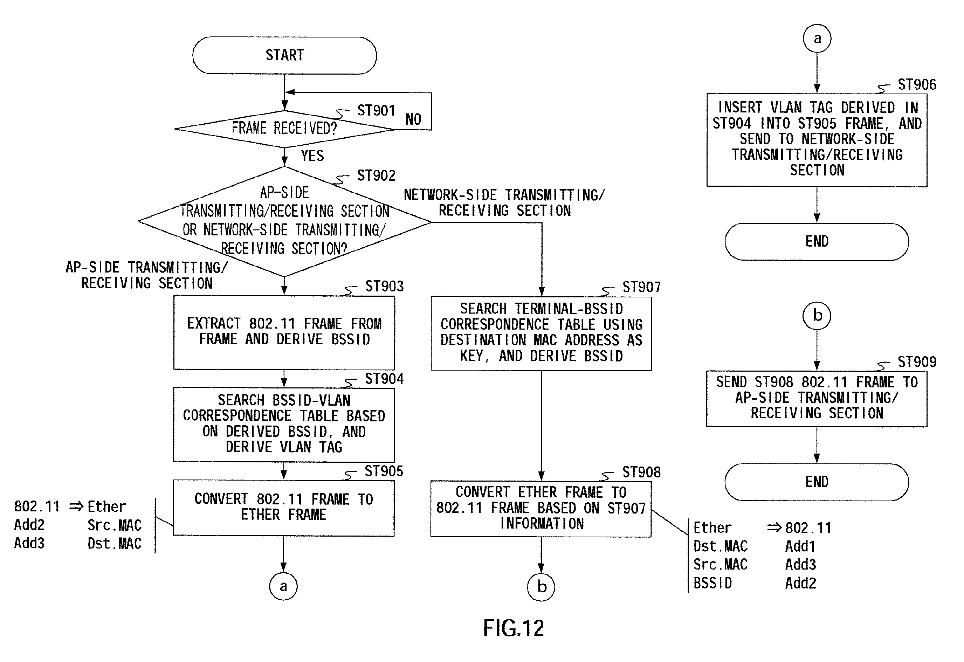

FIG.12 is a flowchart for explaining the operation of the frame distribution section in access point control system 100 according to one embodiment of the present invention.

As shown in FIG.12, in step ST901 frame distribution section 123 determines whether a frame has been received. If it is determined in step ST901 that a frame has been received, frame distribution section 123 determines whether the received frame came from AP-side transmitting/receiving section 124 or from network-side transmitting/receiving section 121 (step ST902).

If it is determined in step ST902 that the received frame came from AP-side transmitting/receiving section 124, frame distribution section 123 extracts an 802.11 frame from the frame and derives a BSSID (step ST903). Then frame distribution section 123 searches BSSID-VLAN correspondence table 1223 based on the derived BSSID, and derives a VLAN tag (step ST904).

Next, frame distribution section 123 converts the 802.11 frame to an Ether frame (step ST905). Then frame distribution section 123 inserts the VLAN tag derived in step ST904 into the frame of step ST905, and sends this to network-side transmitting/receiving section 121 (step ST906).

If it is determined in step ST902 that the received frame came from network-side transmitting/receiving section 121, frame distribution section 123 searches terminal-BSSID correspondence table 1224 using the destination MAC address as the key, and derives a BSSID (step ST907).

Next, frame distribution section 123 converts the Ether frame to an 802.11 frame based on the information (BSSID) in step ST907 (step ST908). Then frame distribution section 123 sends the 802.11 frame of step ST908 toAP-side transmitting/receiving section 124 (step ST909).

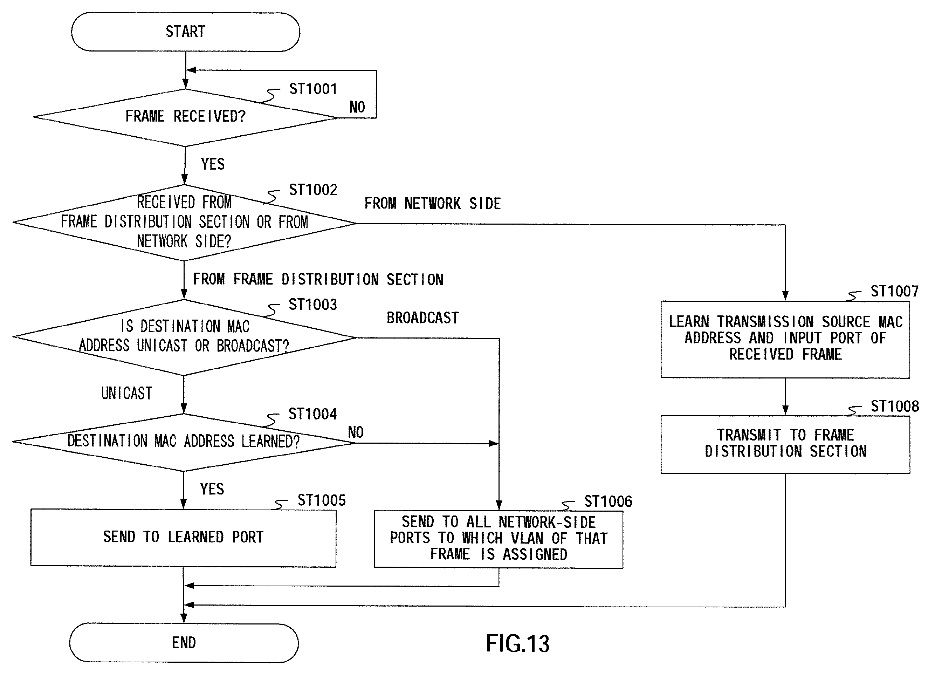

FIG. 13 is a flowchart for explaining the operation of the network-side transmitting/receiving section in access point control system 100 according to one embodiment of the present invention.

As shown in FIG.13, in step ST1001 network-side transmitting/receiving section 121 determines whether a frame has been received. If it is determined in step ST1001 that a frame has been received, network-side transmitting/receiving section 121 determines whether the frame was received from frame distribution section 123 or from the network (VLAN network) side (step ST1002).

If it is determined in step ST1002 that the frame was received from frame distribution section 123, network-side transmitting/receiving section 121 determines whether the destination MAC address is unicast or broadcast (step ST1003). If it is determined in step ST1003 that the destination MAC address is unicast, network-side transmitting/receiving section 121 determines whether the destination MAC address has been learned (step ST1004).

If it is determined in step ST1004 that the destination MAC address has been learned, the frame is sent to the learned port (step ST1005). If it is determined in step ST1003 that the destination MAC address is broadcast, or if it is determined is step ST1004 that the destination MAC address has not been learned, network-side transmitting/receiving section 121 sends the frame to all network-side ports to which the VLAN of that frame is assigned (step ST1006).

If it is determined in step ST1002 that the frame was received from the network side, network-side transmitting/receiving section 121 learns the transmission source MAC address and input port of the received frame (step ST1007). Then network-side transmitting/receiving section 121 transmits the frame to frame distribution section 123 (step ST1008).

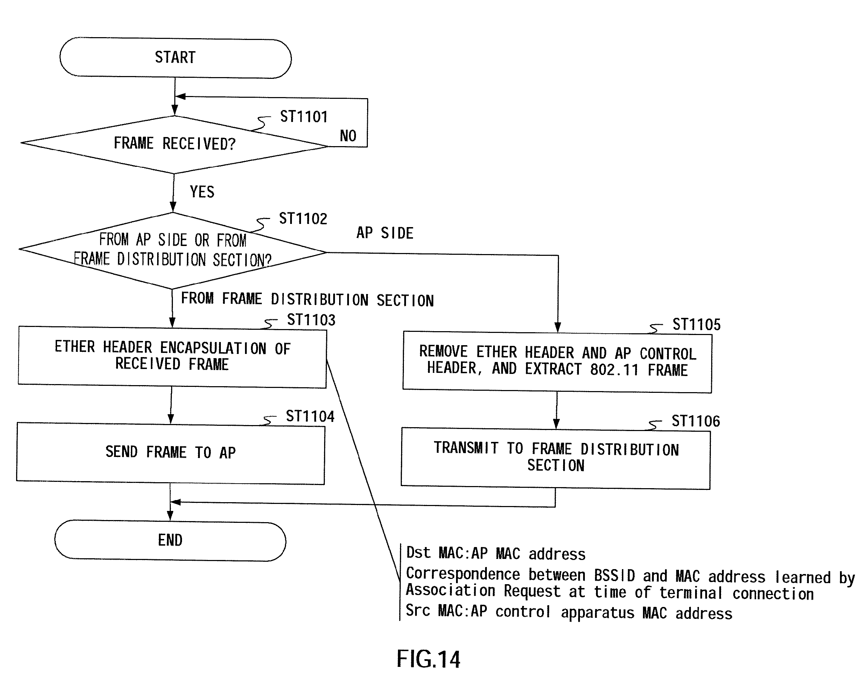

FIG.14 is a flowchart for explaining the operation of an AP-side transmitting/receiving section in access point control system 100 according to one embodiment of the present invention.

As shown in FIG.14, in step ST1101 AP-side transmitting/receiving section 124 determines whether a frame has been received. If it is determined in step ST1101 that a frame has been received, AP-side transmitting/receiving section 124 determines whether the frame was received from the AP side or from frame distribution section 123 (step ST1102).

If it is determined in step ST1102 that the frame was received from frame distribution section 123, AP-side transmitting/receiving section 124 performs Ether header encapsulation of the received frame (step ST1103). Then AP-side transmitting/receiving section 124 sends the frame to an access point apparatus (AP) (step ST1104).

If it is determined in step ST1102 that the frame was received from the AP side, AP-side transmitting/receiving section 124 removes the Ether header and AP control header from the frame, and extracts an 802.11 frame (step ST1105). Then AP-side transmitting/receiving section 124 transmits the frame to frame distribution section 123 (step ST1106).

By means of the above operations, VLAN network distribution can be performed by ESSID in a VLAN network in which a plurality of ESSIDs are assigned to a plurality of access point apparatuses (APs). Which ESSID is set for which access point apparatus (AP) can be set freely by means of ESSID-AP correspondence table 1222, and an operating method is also possible whereby a VLAN network belonging to a specific ESSID is set only for a specific access point apparatus (AP).

Next, the operationof access point control system 100 according to one embodiment of the present invention in the event of network switching will be described in greater detail.

The operation when a VLAN to which a host network of access point control apparatus 120 is assigned as an ESSID is switched will be described.

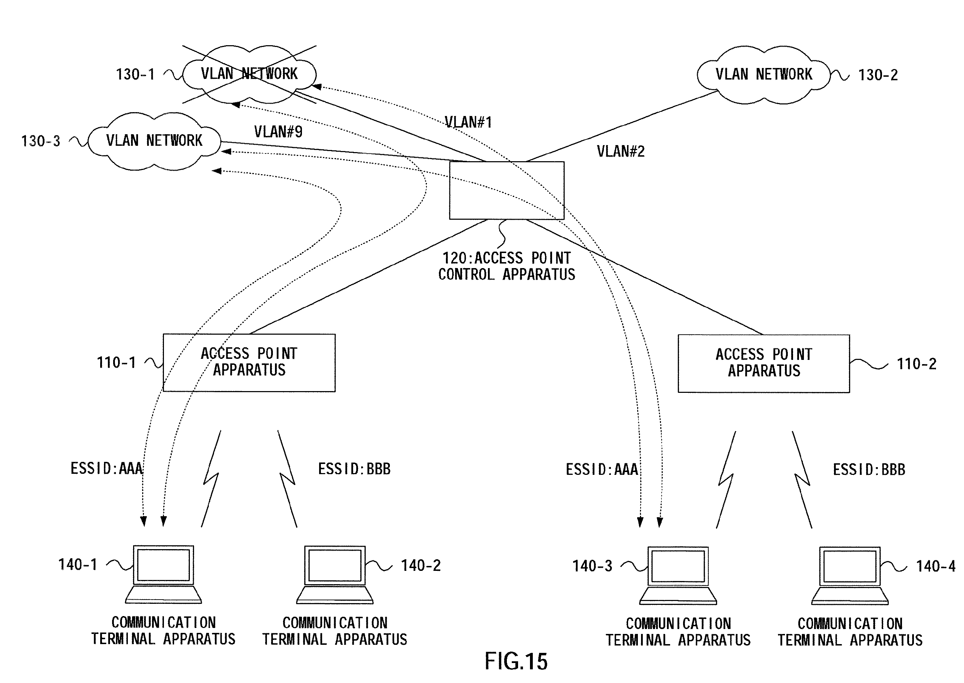

FIG.15 is a drawing for explaining the operation in the event of network switching in access point control system 100 according to one embodiment of the present invention.

As shown in FIG.15, it is assumed that an ESSID:AAA network corresponding to VLAN #1 is switched to VLAN network 130-3 as a substitute when the original network becomes unusable due to a fault or the like.

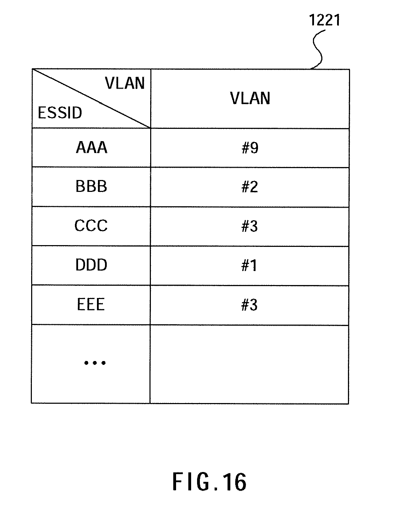

The switching operation described here is for a case where the VLAN tag corresponding to VLAN network 130-3 is made #9 at this time. At the switchover timing, the VLAN corresponding to ESSID:AAA in the ESSID-VLAN correspondence table is changed to #9. The change may be made by the administrator, or the corresponding VLAN may be rewritten automatically when a fault is detected. FIG.16 is a drawing showing an example of ESSID-VLAN correspondence table 1221 after being changed in access point control system 100 according to one embodiment of the present invention.

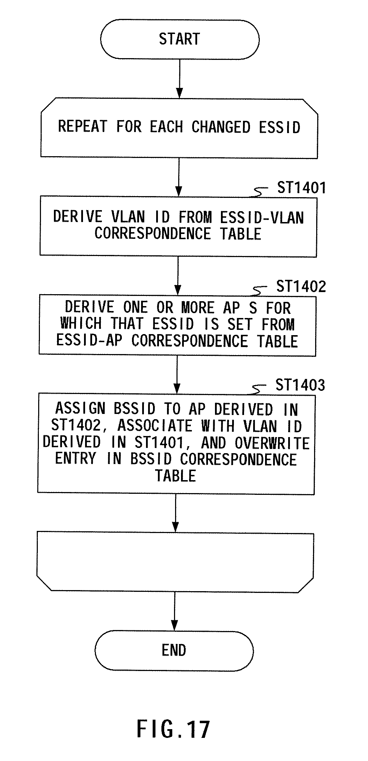

After ESSID-VLAN correspondence table 1221 has been changed, BSSID-VLAN correspondence table 1223 is changed (see FIG.17). This change is performed by frame distribution section 123.

FIG.17 is a flowchart for explaining a BSSID-VLAN correspondence table 1223 change in the event of network switching in access point control system 100 according to one embodiment of the present invention.

As shown in FIG.17, frame distribution section 123 first looks at one changed ESSID, and derives a VLAN ID from ESSID-VLAN correspondence table 1221 information with that ESSID as the key (step ST1401).

Then frame distribution section 123 derives one or more APs for which that ESSID is set from ESSID-AP correspondence table 1222 (step ST1402). Next, frame distribution section 123 assigns one BSSID to the AP derived in step ST1402, associates the VLAN ID derived in step ST1401 with this to make one entry, and overwrites BSSID-VLAN correspondence table 1223 with this (step ST1403). Frame distribution section 123 repeats the above operations for the number of changed ESSIDs.

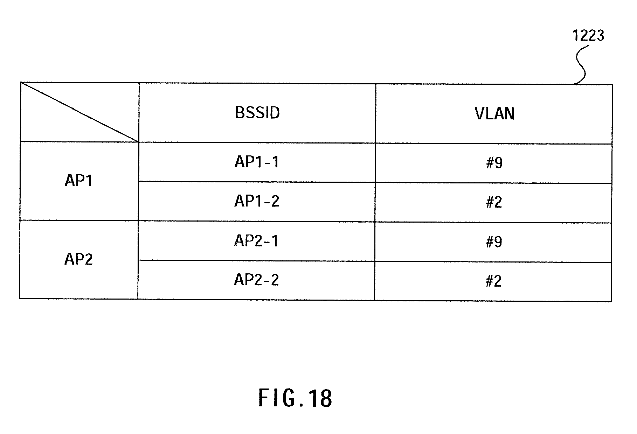

FIG.18 is a drawing showing an example of BSSID-VLAN correspondence table 1223 after being changed in access point control system 100 according to one embodiment of the present invention.

As shown in FIG.18, the corresponding VLAN ID (VLAN tag) is changed from #1 to #9. By this means, host-side VLAN network switching can be performed by executing the operations in FIG.12, FIG.13, and FIG.14.

The present application is based on Japanese Patent Application No.2004-209568 filed on July 16, 2004, entire content of which is expressly incorporated herein by reference.

### Industrial Applicability

The present invention has the effects of enabling a change of correspondence between an access point apparatus's BSSID and a VLAN to be executed easily, and enabling setting changes to be carried out synchronously when changing connection destinations even if there are a large number of connection destination changes, and is useful for an access point control system and access point control method.

## Claims

1. An access point control system comprising:
a plurality of access point apparatuses; and
an access point control apparatus that transmits messages to the plurality of access point apparatuses and controls the plurality of access point apparatuses;
wherein the access point control apparatus has:
a distribution section that distributes frames from the access point apparatuses to a plurality of VLANs (Virtual Local Area Networks) based on BSSIDs (Basic Service Set Identifiers); and
a distribution destination change section that changes a distribution destination VLAN according to the distribution section.

2. The access point control system according to claim 1, wherein:
the distribution section has:
a correspondence table that holds information of the plurality of BSSIDs and a corresponding plurality of VLAN tags; and
a section that distributes the frames to a plurality of VLANs based on the correspondence table; and
the distribution destination change section has a section that changes a distribution destination VLAN by changing one or another of the plurality of VLAN tags of the correspondence table.

3. An access point control method in an access point control system that has a plurality of access point apparatuses, and an access point control apparatus that transmits messages to the plurality of access point apparatuses and controls the plurality of access point apparatuses; the access point control method comprising:
a distribution step of having the access point control apparatus distribute frames from the access point apparatuses to a plurality of VLANs based on BSSIDs; and
a distribution destination changing step of changing a distribution destination VLAN in the distribution step.

4. An access point control apparatus in an access point control system that has a plurality of access point apparatuses, and an access point control apparatus that transmits messages to the plurality of access point apparatuses and controls the plurality of access point apparatuses; the access point control apparatus comprising:
a distribution section that distributes frames from the access point apparatuses to a plurality of VLANs based on BSSIDs; and
a distribution destination change section that changes a distribution destination VLAN according to the distribution section.
